# DEMANDE DE BREVET EUROPEEN

(11) **EP 0 793 996 A1**
(43) Date de publication de la demande: **10.09.1997**
(21) Numéro de dépôt: 97400462.4
(22) Date de dépôt: 28.02.1997
(51) Int. Cl.: B01D 53/86

(54) **Procédé catalytique de désodorisation et désazotation de rejets polluants**

(30) Priorité: 04.03.1996 FR 9601911
(71) Demandeur: INSTITUT FRANCAIS DU PETROLE, 92500 Rueil Malmaison (FR)
(72) Inventeur: Morlec, Jean, 44600 Saint Nazaire (FR)

(57) **Abrégé**

L'invention concerne un procédé catalytique de désodorisation et désazotation de rejets polluants et en particulier un procédé comportant l'élimination des mercaptans et d'hydrogène sulfuré et la combustion de composés organiques volatils et l'oxydation d'ammoniac en azote.

Le procédé comporte deux étapes :
(a) la transformation des mercaptans en disulfures et de l'hydrogène sulfuré en sulfures,
(b) une combustion catalytique des composés organiques volatils et l'oxydation catalytique de l'ammoniac.

## Description

La présente invention concerne un procédé de traitement des matières organiques en fermentation et plus particulièrement les lisiers de porcs qui contiennent des produits soufrés et azotés malodorants. La présente invention s'applique également au traitement de lisiers de canard, au traitement de fientes de poule et autres volatiles, au traitement d'autres déjections animales, au traitement de lixiviats d'ordures ménagères et au traitement de tous produits similaires ou équivalents. Le procédé selon l'invention permet l'élimination dans des matières organiques en fermentation d'hydrogène sulfuré, de mercaptans d'ammoniac et de composés organiques par exemple volatils et/ou azotés tels que amines, amines légères, dérivés d'acides gras ou acides gras, phénols, aldéhydes.... La présence de ces produits plus ou moins volatils pose à l'épandage des problèmes d'environnement : problèmes liés aux odeurs et problèmes liés à l'apport soudain de produits azotés dont l'ammoniaque qui participent à la pollution des eaux de surface et de la nappe phréatique.

L'invention concerne donc essentiellement un procédé catalytique de désodorisation et désazotation de rejets polluants, notamment d'effluents polluants et nauséabonds. L'invention concerne notamment un procédé en deux étapes permettant au niveau, par exemple, d'une fosse de rétention ou dans un dispositif appelé SMELOX l'élimination chimique des composés les plus malodorants, le strippage à l'air d'une fraction des composés organiques les plus volatils et de l'ammoniac; la combustion des produits strippés et l'oxydation de l'ammoniaque en azote et en eau sont conduits dans un réacteur catalytique équipé d'un brûleur additionnel. Le brûleur fonctionne de façon classique. L'appoint est réalisé de façon classique par exemple par un brûleur à fuel ou à gaz, ou batterie électrique ou par apport de vapeur.

Parmi les composés les plus malodorants de ce milieu on compte les mercaptans et plus particulièrement les mercaptans légers ; leur oxydation sous forme de sels sodiques, potassiques ou calciques par exemple, permet de les transformer en disulfures dont le seuil de reconnaissance exprimé en volume par million est bien plus élevé et qui présentent l'avantage d'être bien moins volatils. L'apport d'oxygène s'opère par un barbotage énergique d'air dans le milieu liquide préalablement additionné d'une base alcaline ou forte (la potasse ou la chaux de préférence ou la soude ou l'hydroxyde de lithium ou un carbonate de la dite base forte ou alcaline), qui permet d'apporter au mélange un élément fertilisant complémentaire. Cette oxydation qui peut être catalysée par divers types d'agents actifs soit organiques, tels les composés de la famille des tanins, soit organométalliques du type chélates parmi lesquels les phtalocyanines des métaux de transition, soit même minéraux, telle la SODALITE à forte teneur en radicaux soufre connue dans le commerce sous le vocable de bleu d'OUTRE-MER. Ces catalyseurs peuvent être utilisés soit sous forme soluble dans l'eau, soit sous forme de poudres en suspension, tel le bleu d'outre-mer pulvérulent. Ce qui a été décrit ci-dessus est la première étape du procédé.

L'air de barbotage utilisé pour l'oxydation entraîne hors du stockage une quantité plus ou moins importante de composés volatils qui sont essentiellement des composés organiques volatils et de l'ammoniac. Dans une seconde étape, selon l'invention, cet air chargé en ammoniac et en composés organiques volatils (C.O.V). passe en majeur partie et de préférence totalement sur un catalyseur de combustion où les C.O.V. sont transformés pour l'essentiel en gaz carbonique CO₂, l'ammoniac étant transformé par oxydation en azote moléculaire et le soufre des composés sulfurés en SO₂ .

Le présent procédé est un perfectionnement de la demande de brevet européen EP - 8- 682973

L'élimination des mercaptans ou de leurs sels de bases fortes sous forme de disulfures est pratiquée depuis plus de 30 ans dans certains procédés d'adoucissement des coupes pétrolières légères. Pour sa part, l'IFP a développé divers catalyseurs et procédés dans ce domaine qui ont donné lieu aux brevets français FR-B-2 591 610, FR-B-2 619 822, FR-B-2 635 1 1 1 et EP-B-213 026.

Quant à la combustion catalytique des C.O.V. contenus dans l'air de barbotage, elle dérive d'une réaction connue et utilisée dans l'élimination de polluants dans les gaz de combustion industriels, les gaz d'échappement automobiles ainsi que les effluents des procédés d'oxydation. Il conviendra ici, de préférence, de sélectionner le catalyseur le mieux adapté pour traiter les effluents obtenus dans le cas particulier qui fait l'objet de la présente invention.

L'oxydation de l'ammoniac qui accompagne les C.O.V., sera réalisée sur un catalyseur approprié en donnant directement de l'azote N₂ et de l'eau. Dans la demande de brevet FR A-93/01441 que le présent procédé perfectionne, le traitement des C.O.V. s'accompagnait non pas d'une combustion directe d'ammoniac en azote moléculaire et en eau mais d'une transformation de l'ammoniac en oxyde(s) d'azote. Le procédé nécessitait alors une troisième étape de réduction des oxydes d'azote en azote moléculaire nécessitant la mise en oeuvre d'un troisième type de catalyseur. Le présent procédé permet en outre maintenant de pouvoir de préférence éliminer ou bloquer la totalité des mercaptans et la totalité de l'ammoniac libre.

L'invention concerne ainsi un procédé en 2 étapes permettant de traiter en particulier les lisiers de porcs ou autres effluents décrits plus haut de manière à les rendre à la fois moins malodorants et moins polluants au moment de leur épandage. Cet enchaînement de deux étapes spécifiques permet d'éliminer ou de retenir la majeure partie et même la totalité des mercaptans, d'entraîner et de brûler une partie des composés organiques volatils qui sortent à l'évent ainsi que la totalité de l'ammoniac libre c'est à dire gazeux en N₂ + H₂O. L'énergie dégagée dans les réactions de combustion peut être utilisée pour la production d'eau chaude sur le site.

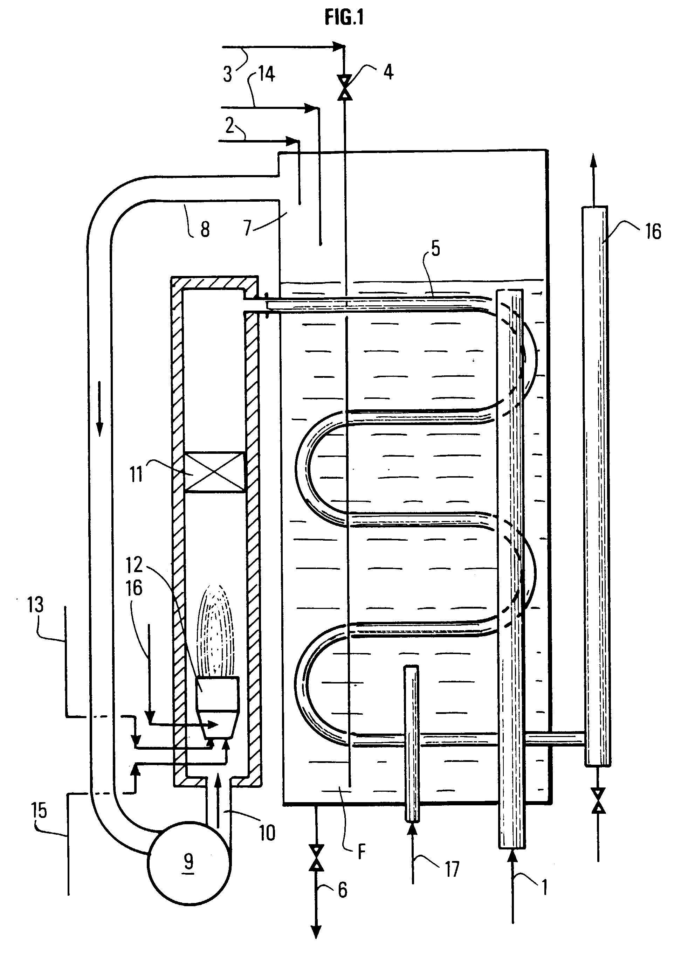

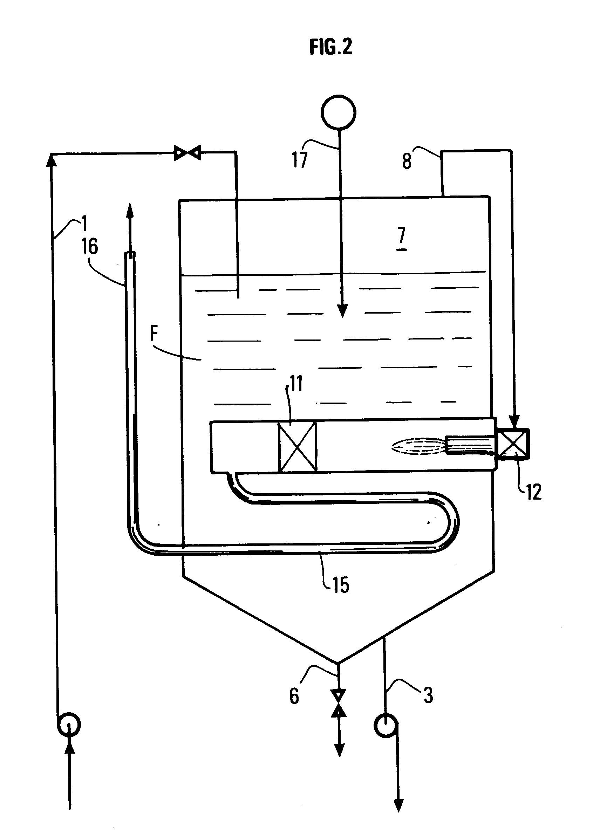

Un schéma succinct du procédé en ses diverses étapes est présenté dans la figure 1. Dans la fosse F où le lisier est introduit par la ligne 1, on ajoute la solution par exemple de chaux. Par la ligne 2 un agent tensio actif peut être ajouté par le conduit 14. Un prélèvement d'air est effectué par la ligne 3, via le clapet anti-retour 4. L'air barbote en phase liquide au travers par exemple d'une rampe. Le lisier traité s'évacue par la ligne 6. L'air, après barbotage, chargé de gaz ammoniac et de composés organiques volatils s'évacue à partir de l'évent 7 par la ligne 8 jusqu'au manifold (ou conduite) 9. La majeure partie du gaz passe sur le réacteur 11 à travers les zones 9 et 10 où l'ammoniac est oxydé en azote et eau et les C.O.V. (Composés Organiques Volatils) en CO₂ (avec mise en oeuvre du brûleur 12 alimenté par des gaz classiques de combustion : l. 13, 15, 16). Les gaz sont refroidis puis condensés lors de la traversée (par le conduit 5) du lisier de la fosse F. Les condensats aqueux qui contiennent des oxydes de soufre dont SO₃ peuvent être recyclés dans la fosse (F) où ils sont neutralisés par exemple par la chaux. Les gaz issus de la condensation sont rejetés à l'atmosphère (16). La circulation d'air peut s'opérer par un ventilateur V à l'entrée et/ou à la sortie du circuit. La figure 2 est une variante de la figure 1. On a représenté les éléments essentiels de la figure 1.

L'oxydation des mercaptans en disulfures s'opère en milieu basique à température ordinaire, la basicité étant par exemple apportée par ajout de potasse ou de chaux (utilisés de préférence) ou de carbonate de potassium à raison de 0,1 à 10 kg/m³. Les catalyseurs utilisés peuvent être des complexes métalliques de la famille des phtalocyanines, préférentiellement le fer, soit rendus solubles par sulfonation, soit insolubles mais déposés sur du carbone activé qui exerce un effet cocatalytique sur la transformation des mercaptans en disulfures.

Parmi les autres catalyseurs qui activent cette oxydation sélective des mercaptans, citons également des dérivés tanniques en présence de sels de fer [1-(2 Thiazolylazo)] - 2 - napthol et analogues phénoliques diversement substitués. Certains composés minéraux dérivés de la sodalite manifestent également une bonne activité catalytique dans la mesure où ils ont été traités à haute température en présence de sulfure de sodium (bleu d'OUTRE-MER).

Le catalyseur de combustion peut être à base de métaux précieux à très faibles teneurs promus ou non par du cuivre, du fer, des terres rares. Des catalyseurs plus communs à base d'oxyde de cobalt, de manganèse, de vanadium peuvent être également utilisés mais à des températures supérieures de 100 à 150° C, c'est-à-dire à partir de 400° C au lieu de 250-300° C pour les métaux précieux. Les supports utilisés seront de préférence des alumines de basse surface spécifique ou mieux de l'oxyde de titane. Le réacteur doit donc être préalablement chauffé pour que la réaction de combustion puisse se déclencher. Une fois la réaction amorcée, l'exothermicité liée à la combustion de l'ammoniac et des C.O.V. permet d'arrêter le préchauffage. La vitesse spatiale est par exemple, comprise entre 10 000 et 100 000 h⁻¹ et de préférence entre 20 000 et 50 000 h-¹ c'est-à-dire entre 20 000 et 50 000 litres de gaz total par litre de catalyseur et par heure.

Les catalyseurs solides sont disposés dans les réacteurs de manière à créer la plus petite perte de charge possible pour diminuer la puissance des équipements de circulation d'air. Les lits envisagés peuvent donc être radiaux ou axiaux; dans le cas de réacteurs axiaux, on pourra avantageusement disposer le catalyseur dans des enveloppes en acier inoxydable (tétraèdes, cylindres). Le support le mieux adapté à une opération effectuée à pression atmosphérique étant la structure en nid d'abeille, laquelle permet de minimiser les pertes de charge.

### Exemple 1

On opère en continu sur une citerne de lisier de 10m³ de volume remplie de 7 m³ d'un stockage réel de lisier démarré plusieurs mois auparavant; on réalise la série d'opérations de la figure 1; On fait circuler 1 à 2 T/heure de lisier sous un débit horaire de 650m³ d'air. On ajoute au milieu à traiter 5 kg de chaux (on utilise à titre d'exemple non limitatif, un mélange : 1/3 CaO + 1/3 Ca (OH)₂ + 1/3 CO₃Ca/m³ de lisier ajouté en continu) et 5 g de bleu d'OUTRE-MER ou SODALITE. Les gaz sont envoyés en amont du brûleur et portés à la température de 300 à 600° C et de préférence 350 à 450° C, puis sont envoyés sur le catalyseur à base de platine. L'air de stripping est amené en amont du brûleur par une pompe de circulation. Les gaz sont portés à la température de 350 à 450° C avant de passer sur au moins 1 lit (1 lit ici dans l'exemple) d'un catalyseur à base de platine. Les produits de la réaction échangent leur chaleur par contact indirectement avec la masse du lisier et sont rejetés à l'atmosphère à ce stade, on opère à une température qui varie de 60 à 72° C environ selon les saisons et qui par exemple pour une teneur en azote total de 4 kg/m³, dont 3 kg/m³ d'azote ammoniacal, permet à l'issue du traitement de retirer en hiver (température extérieure de 0° C) 48 % de la teneur en azote total.

### Exemple 2

On délite 280 Kg de fientes de volailles ou autres volatiles dans de l'eau jusqu'à obtenir 1 m³ de mélange que l'on traite dans les conditions de l'exemple 1. Dans cet essai, le mélange a perdu la totalité de son odeur ammoniaquée et les rejets ne contiennent que des traces d'ammoniaque transformées en azote moléculaire ou retenues par une solution de potasse ou solution similaire servant au lavage ultime.

De préférence les conditions opératoires de l'étape 1 sont les suivantes :
- **T** 40à 90° C et notamment environ 70° C lorsqu'on utilise la chaux
- **P** ordinaire (0,1 à 0,9 kg/cm² notamment lorsqu'on emploi la chaux)
- **débit air** : 50 à 200 m³/m^{3/}h de liquide - de préférence autour de70 m³/m³/h)
- **Catalyseurs** :
   - phtalocyanines solubles (sulfonées de métaux de transition Co et Fe.
   - phtalocyanines insolubles déposées sur C actif (200 à 1200 m²/g)
   - concentration de phtalocyanine : 10 à 200 ppm rapportée au volume liquide à traiter. Sur charbon : 5 à 100 ppm déposés à raison de 3 à 5 % sur le charbon par imprégnation à sec en milieu crésol.
   - bleu d'OUTREMER de 1 à 3 g par m³ de produit à traiter ; de préférence autour de 3 g.

On rappelle que les gaz envoyés en amont du brûleur sont portés à la température, par exemple, de 300 à 600° C de préférence 350 à 450° C.

De préférence les conditions opératoires de l'étape 2 sont les suivantes : le catalyseur renferme au choix :
a)- Pt ou Pd sur réfractaire, silice zircone, silice alumine, alumine stabilisée, terres naturelles du type sepiolite, attapulgite, zéolite Y ou mordénite à raison de 2 g de métal par litre de catalyseur. Le catalyseur peut avantageusement être promu par des métaux du groupe I B de la classification périodique (Au, Ag, Cu) et par des oxydes de terres rares et de fer.
b) - oxydes de métaux de transition, Fe, Co, Mn, V, W, seuls ou en mélange
   **T** : 250 à 550° C, de préférence
   **P** : atmosphérique ou réduite
   **VVH** : entre 10 000 et 100 000 m³ de flux gazeux par m³ de catalyseur et par heure, et de préférence entre 20 000 et 50 000 h⁻¹.

De préférence, les lits de catalyseur de combustion sont radiaux pour réduire la perte de charge.

Dans le cas des lits de catalyseur axiaux, ceux-ci sont de préférence à courants ascendants mais le catalyseur est inséré dans des volumes de 5 à 10 cm³, par exemple, pour réduire les pertes de charge et surtout leur croissance au cours du temps. Cet agencement permet un rinçage périodique des lits catalytiques.

Dans une méthode préférée, la potasse de la première étape est remplacée par de la soude ou de l'hydroxyde de lithium ou mieux, par de la chaux.

La solution de barbotage finale peut être à base de soude ou d'une suspension de lait de chaux.

Le procédé selon l'invention peut donc s'appliquer aux lisiers de porc mais également peut s'appliquer à d'autres effluents malodorants chargés en ammoniac dans la mesure où ils sont préalablement mis en suspension dans l'eau : fientes de volailles et autres déjections animales, eaux usées diverses etc.

Les opérations de désodorisation et d'élimination des composés azotés volatils peuvent être réalisées par exemple en continu ou de préférence périodiquement.

## Revendications

1. Procédé d'élimination, dans des matières organiques en fermentation d'hydrogène sulfuré, de mercaptans d'ammoniac et de composés organiques, (par exemple amines et acides gras) selon un processus en deux étapes comportant :
(a)• la transformation par oxydation des mercaptans en disulfures et de l'hydrogène sulfuré en sulfures, en présence d'air et d'au moins un catalyseur avec apport d'oxygène obtenu par barbotage dans un liquide contenant une base alcaline parmi la potasse, la chaux, la soude et l'hydroxyde de lithium ou un carbonate de la dite base alcaline.
(b)• une combustion catalytique des composés organiques entraînés dans l'air d'oxydation dont l'ammoniac et certaines amines légères.

2. Procédé selon la revendication 1 dans lequel les conditions opératoires de l'étape 1 sont les suivantes :
- **T** 40 À 90° C
- **P** 0,1 à 0,9 kg/cm²
- **débit air** : 50 à 200 m³/m³h de liquide - de préférence autour de70 m³/m³.h)
- Catalyseur choisi dans le groupe constitué par:
- phtalocyanines solubles (sulfonées de métaux de transition Co et Fe.
- phtalocyanines insoblubles déposées sur charbon actif (200 à 1200 m²/g)
- bleu d'outremer de 1 à 3 g par m³ de produit à traiter; de préférence autour de 3 g.

3. Procédé selon la revendication 1 dans lequel les conditions opératoires de l'étape 2 sont les suivantes :
Catalyseur choisi parmi :
a )- Pt ou Pd sur réfractaire, silice zircone, silice alumine, alumine stabilisée, terres naturelles du type sepiolite, attapulgite, zéolite Y ou mordénite à raison de 2 g de métal par litre de catalyseur, le catalyseur étant avantageusement promu par des métaux du groupe I B de la classification périodique (Au, Ag, Cu) et par des oxydes de terres rares et de fer.
et b) - oxydes de métaux de transition, Fe, Co, Mn, V, W, seuls ou en mélange T: 250 à 550° C de préférence
P : atmosphérique ou réduite
VVH : entre 10 000 et 100 000 m³ de flux gazeux par m³ de catalyseur et par heure, et de préférence entre 20 000 et 50 000 h⁻¹.

4. Procédé selon l'une des revendications 1 à 3 dans lequel les lits de catalyseur sont radiaux pour réduire la perte de charge.

5. Procédé selon l'une des revendications 1 à 3 dans lequel les lits de catalyseur sont axiaux et sont à courants ascendants, le catalyseur étant inséré dans des volumes de 5 à 10 cm³ pour réduire les pertes de charge et surtout leur croissance au cours du temps.

6. Procédé selon l'une des revendications (1 à 5) dans lequel on utilise de la chaux dans la première étape.

7. Procédé selon l'une des revendications 1 à 6 dans lequel les opérations de désodorisation et d'élimination des composés azotés volatils sont réalisées en continu ou de préférence périodiquement.

8. Procédé selon l'une des revendication 1 à 7 dans lequel les dits composés organiques sont choisis dans le groupe constitué par les amines, les acides gras. .

9. Procédé selon l'une des revendications 1 à 8 appliquée au traitement du lisier de porc.

10. Procédé selon l'une des revendication 1 à 8 appliqué au traitement des effluents malodorants chargés en ammoniac (dans la mesure où ils sont préalablement mis en suspension dans l'eau) tels que fientes de volailles et autres déjections animales, eaux usées diverses.

11. Procédé selon l'une des revendications 1 à 8 appliqué au traitement de lixiviats d'ordures ménagères.

12. Procédé selon l'une des revendications 1 à 11 dans lequel le lit de catalyseur est en nid d'abeille pour minimiser les pertes de charge.
